# EUROPÄISCHE PATENTSCHRIFT

(11) **EP 0 369 136 B1**
(45) Veröffentlichungstag und Bekanntmachung des Hinweises auf die Patenterteilung: **20.01.1993**
(21) Anmeldenummer: 89117260.3
(22) Anmeldetag: 19.09.1989
(51) Int. Cl.: G01G 21/24

(54) **Elektromechanische Waage mit mehrfacher Hebelübersetzung**
Elektromechanical balance with multiple level transmission
Balance électromécanique avec transmission multiple de levier

(30) Priorität: 15.11.1988 CH 4238/88
(43) Veröffentlichungstag der Anmeldung: 23.05.1990
(73) Patentinhaber: Mettler-Toledo AG, 8606 Greifensee (CH)
(72) Erfinder: Kunz, Peter, CH-8625 Gossau (CH)

(56) Entgegenhaltungen:
- CH-A- 591 684
- CH-A- 661 121
- US-A- 4 632 198
- US-A- 4 711 314

## Beschreibung

Die Erfindung betrifft eine elektromechanische Waage mit mehrfacher Hebelübersetzung zwischen einem parallelgeführten Lastaufnehmer für das Wägegut und einer Wägezelle. Die Wägezelle kann von gebräuchlicher Art sein und beispielsweise mit Dehnungsmessstreifen, mit Schwingsaiten oder mit elektromagnetischer Kraftkompensation arbeiten. Eine Waage mit elektromagnetischer Kraftkompensation und zweifacher Hebelübersetzung ist z.B. aus der DE-OS 28 44 336 bekannt.

Elektromechanische Waagen dieser Art werden jeweils in verschiedenen mechanischen Modellen unter Verwendung einer einheitlichen Wägezelle in Serie hergestellt und je nach Nennlast mit einer entsprechenden Anzahl von Uebersetzungshebeln ausgerüstet. In der Regel ist innerhalb eines solchen Waagenprogramms nur die Wägezelle in grossen Stückzahlen herstellbar, während für den mechanischen Teil der Waage meist verschiedene, von der Nennlast derselben abhängige Konstruktionen zur Anwendung kommen, die bei der Herstellung dementsprechend zu Serien mit kleineren Stückzahlen führen.

Eine andere Schwierigkeit ergibt sich bei Waagen mit einem zuschaltbaren Kalibriergewicht. Um die Grösse des Kalibriergewichts mit Bezug auf das Gesamtkonzept einer höherlastigen Waage in gewissen Grenzen zu halten, befindet sich der Kraftangriffspunkt des Kalibriergewichts vorzugsweise an der Stelle der Kraftübertragung zwischen zwei Uebersetzungshebeln, z.B. an der Stelle der Krafteinleitung an dem unmittelbar auf die Wägezelle einwirkenden Uebersetzungshebel. Die Wirkung des Kalibriergewichts auf die Wägezelle ist jedoch bei einer solchen direkten Ankoppelung desselben an einen Uebersetzungshebel von der Lage des zugeschalteten Kalibriergewichts bezüglich der Längsausdehnung des Uebersetzungshebels abhängig. Um jederzeit eine zuverlässige Kalibrierung zu erreichen, muss die Länge des Hebelarms, an dem das Kalibriergewicht jeweils zur Wirkung gelangt, langzeitig konstant bleiben. Diese Voraussetzung ist aber nur dann erfüllt, wenn der Zuschaltmechanismus mit höchster Präzision gearbeitet ist. Schon ein minimaler Versatz in der Führung des Kalibriergewichts zum Auflagepunkt hin kann nach wiederholtem Zuschalten zu einer Verschiebung des Auflagepunktes und damit zu einer Veränderung der Hebelarmlänge führen, deren Ausmass insbesondere bei hochauflösenden Waagen störend ins Gewicht fallen kann.

Eine gemeinsame Lösung der dargelegten Probleme lässt sich nun bei einer elektromechanischen Waage der eingangs genannten Art dadurch erzielen, dass erfindungsgemäss wenigstens dem unmittelbar auf die Wägezelle einwirkenden Uebersetzungshebel ebenfalls ein parallelgeführter Lastaufnehmer zugeordnet ist.

Im Hinblick auf eine wirtschaftlichere Serienfabrikation ermöglicht die Erfindung ein verbessertes Waagenkonzept, das gemäss einem bevorzugten Ausführungsbeispiel darin besteht, dass der mit der Wägezelle zusammenwirkende Uebersetzungshebel und der diesem zugeordnete Lastaufnehmer zusammen mit der Wägezelle zu einer baulichen Grundeinheit vereinigt ist, die eine selbständige Waage niedriger Nennlast darstellt und in den übrigen mechanischen Teil der für eine höhere Nennlast bestimmten Waage eingesetzt ist. Die genannte Grundeinheit kann innerhalb einer Modellreihe die Waage mit der niedrigsten Nennlast darstellen und bei allen höherlastigen Waagen dieser Modellreihe zum Einsatz kommen. Dabei handelt es sich um eine umfangreichere Baueinheit, als dies die Wägezelle für sich allein darstellt. Die Serienfabrikation lässt sich daher auf einen grösseren Materialbereich ausdehnen als bisher.

Die Ankopplung der die Wägezelle umfassenden Grundeinheit bei deren Einsatz in einer höherlastigen Waage an die vorgeschaltete Hebelübersetzung ist unkritisch, da die korrekte Kraftübertragung von der Lage des Ankopplungspunktes am Lastaufnehmer in der Grundeinheit unabhängig ist. Der Zusammenbau der Waage wird dadurch vereinfacht. Unter Umständen kann die Grundeinheit sogar als Einschubgerät ausgebildet sein, was die Montage derselben zusätzlich erleichtert.

Eine Weiterentwicklung dieses Lösungsgedankens führt zu dem Vorschlag, innerhalb einer Modellreihe sämtliche Waagen unterschiedlicher Nennlast nach dem Baukastenprinzip aufzubauen, indem z.B. jedem der weiteren Uebersetzungshebel ein parallelgeführter Lastaufnehmer zugeordnet ist und jeweils ein Uebersetzungshebel und der zugehörige Lastaufnehmer eine bauliche Ergänzungseinheit bilden, in die eine Waage niedrigerer Nennlast zum Aufbau einer Waage höherer Nennlast einsetzbar ist. Auf diese Weise lässt sich jede Waage einer bestimmten Nennlast aus einer Waage mit der nächstniedrigeren Nennlast und einer Ergänzungseinheit zusammenbauen. Dabei können sowohl die Grundeinheit als auch die Ergänzungseinheiten, welche der Ergänzungseinheit zum Aufbau einer Waage mit der höchsten Nennlast untergeordnet sind, als Einschubgeräte ausgebildet sein. Beispielsweise enthält der Bausatz für ein Waagenprogramm, das vier Waagen mit den Nennlasten 0,1 kg, 1 kg, 20 kg und 600 kg umfasst, eine die 0,1kg-Waage darstellende Grundeinheit und drei Ergänzungseinheiten. Die 1kg-Waage entsteht aus der 0,1kg-Waage und einer 1. Ergänzungseinheit, die 20kg-Waage aus der 1kg-Waage und einer 2. Ergänzungseinheit und die 600kg-Waage aus der 20kg-Waage und einer 3. Ergänzungseinheit. Die 0,1kg-Waage sowie die 1. und 2. Ergänzungseinheit können als Einschubgeräte ausgebildet sein, was bedeutet, dass beim Zusammenbau der verschiedenen Einheiten jeweils keine Justierarbeiten anfallen, sondern lediglich Koppelglieder anzubringen sind. Aufgrund dieses Baukastenprinzips lässt sich die Waagenherstellung flexibler und wirtschaftlicher gestalten. Ausserdem können auch auf der Basis dieses Konzepts, unter Verwendung einer hochauflösenden, insbesondere nach dem Prinzip der elektromagnetischen Kraftkompensation arbeitenden Wägezelle und präzis arbeitender, langzeitstabiler Uebertragungsglieder, hochauflösende, breitbandige Hochgewichtswaagen hergestellt werden.

Bei einer Waage mit zuschaltbarem Kalibriergewicht befindet sich der Kraftangriffspunkt für das Kalibriergewicht vorzugsweise an einem Lastaufnehmer, insbesondere am Lastaufnehmer für den mit der Wägezelle zusammenwirkenden Uebersetzungshebel. Damit erreicht man, in gleicher Weise wie beim Lastaufnehmer für das Wägegut, eine von der Lage des aufgelegten Gewichts unabhängige Krafteinleitung in den an den Lastaufnehmer angekoppelten Uebersetzungshebel. Allfällige Längenänderungen in bezug auf den Hebelarm, an dem das Kalibriergewicht jeweils zur Wirkung gelangt, haben somit auf die Kalibrierung keinen Einfluss. Ferner werden an die Genauigkeit des Zuschaltmechanismus weniger hohe Anforderungen gestellt.

Grundsätzlich ergeben sich durch den Einbau eines oder mehrerer zusätzlicher parallelgeführter Lastaufnehmer etwas grössere Abmessungen der Waage. Immerhin lässt sich aber dem allgemeinen Bestreben nach geringer Bauhöhe z.B. dadurch Rechnung tragen, dass die Baugruppen in Flachbauweise nebeneinander angeordnet sind. Diese Lösung ist insbesondere bei Hochgewichtswaagen, deren horizontale Ausdehnung ohnehin verhältnismässig gross ist, mit Vorteil anwendbar, da eine geringe Bauhöhe solcher Waagen das Beladen, insbesondere das Befahren derselben erleichtert.

In der Zeichnung sind Ausführungsbeispiele der Erfindung schematisch dargestellt, und zwar zeigen:
Fig. 1 den Aufbau einer als selbständige Waage niedriger Nennlast verwendbaren, die Wägezelle und einen Uebersetzungshebel umfassenden baulichen Grundeinheit,
Fig. 2 eine mit einem weiteren Uebersetzungshebel ausgerüstete bauliche Ergänzungseinheit mit eingesetzter Grundeinheit zum Aufbau einer höherlastigen Waage, in kleinerem Massstab, und
Fig. 3 eine der Waage nach Fig. 2 entsprechende Waage in Flachbauweise, in kleinerem Massstab.

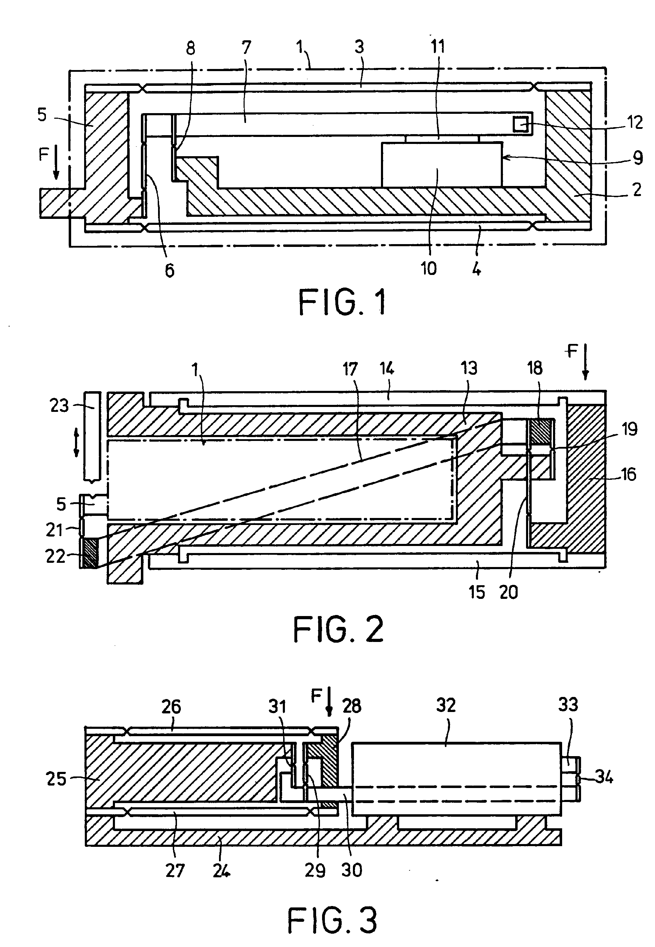

Die in Fig. 1 gezeigte Waage stellt eine bauliche Grundeinheit 1 für eine höherlastige Waage mit mehrfacher Hebelübersetzung gemäss der Erfindung dar. An einem Ständer 2 ist ein durch Biegelenker 3 und 4 parallelgeführter Lastaufnehmer 5 angebracht. Ueber ein Biegekoppel 6 wirkt der Lastaufnehmer 5 auf einen Uebersetzungshebel 7, der mit einem Biegelager 8 am Ständer 2 gelagert ist. Die Wägezelle 9, die im vorliegenden Beispiel mit elektromagnetischer Kraftkompensation arbeitet, besteht im wesentlichen aus einem permanentmagnetischen Topf 10, der auf dem Ständer 2 ruht, und einer Tauchspule 11, die am längeren Hebelarm des Uebersetzungshebels 7 angebracht ist. Am freien Ende des Uebersetzungshebels 7 ist ein Nullage-Detektor 12 angedeutet, der in bekannter Weise zusammen mit einer Regelschaltung bewirkt, dass der bewegliche Teil der Waage beim Einwirken einer Kraft F auf den Lastaufnehmer 5 durch die elektromagnetische Kraftkompensation in seine Nullage zurückgeführt wird.

Eine prinzipiell nach Fig. 1 aufgebaute Waage ist als selbständige Waage mit niedriger Nennlast und höher Auflösung verwendbar und als solche bekannt. Bei höherlastigen Waagen mit mehrfacher Hebelübersetzung war jedoch ein dem mit der Wägezelle 9 zusammenarbeitenden Uebersetzungshebel 7 zugeordneter parallelgeführter Lastaufnehmer 5 bisher nicht vorgesehen und als unnötig erachtet worden. Vielmehr ist bei solchen Waagen das zusätzliche Hebelwerk mit dem Uebersetzungshebel 7, der auf die Wägezelle 9 einwirkt, unmittelbar gekoppelt, wie dies beispielsweise in Fig. 4 der DE-OS 28 44 336 am Beispiel einer elektromagnetischen Waage mit zweifacher Hebelübersetzung dargestellt ist.

Der in der Grundeinheit 1 vorhandene parallelgeführte Lastaufnehmer 5 ermöglicht nun aber nach dem erfindungsgemässen Konzept den Aufbau einer höherlastigen Waage durch den Einsatz dieser Grundeinheit 1 in den übrigen mechanischen Teil einer solchen Waage, wobei sich die einleitend erwähnten Vorteile ergeben.

Eine derart aufgebaute Waage mit zweifacher Hebelübersetzung ist in Fig. 2 dargestellt. Den übrigen mechanischen Teil der Waage bildet hier eine bauliche Ergänzungseinheit, bestehend aus einem Ständer 13, an dem ein durch Biegelenker 14 und 15 parallelgeführter Lastaufnehmer 16, an dem die Wägelast in Form der Kraft F angreift, und einem seitlich am Ständer 13 vorbeigeführten Uebersetzungshebel 17, der an seinem einen Ende 18 mit einem Biegelager 19 am Ständer 13 gelagert und über ein Biegekoppel 20 mit dem Lastaufnehmer 16 verbunden ist. Die Grundeinheit 1 nach Fig. 1 ist als kompaktes Einschubgerät in den Ständer 13 der Ergänzungseinheit eingesetzt, und der Lastaufnehmer 5 der Grundeinheit 1 ist über ein Biegekoppel 21 mit dem anderen Ende 22 des Uebersetzungshebels 17 der Ergänzungseinheit verbunden.

Somit kann die nach Fig. 1 aufgebaute Waage mit niedriger Nennlast durch ihren Einsatz als Grundeinheit in eine Ergänzungseinheit in einfacher Weise zu einer höherlastigen Waage erweitert werden. Nebst dem geringen Montageaufwand für diese Erweiterung ergibt sich aus dem Vorhandensein des parallelgeführten Lastaufnehmers in der Grundeinheit der Vorteil, dass sowohl in bezug auf die mechanische Kopplung zwischen Grund- und Ergänzungseinheit als auch in bezug auf den Angriffspunkt eines zuschaltbaren, auf den Lastaufnehmer 5 absenkbaren Kalibriergewichts 23 keine derart hohen Ansprüche an die Lagegenauigkeit gestellt werden, wie sie sonst bei hochauflösenden Waagen nur mit aufwendigen Justierarbeiten erfüllt werden können.

Es können weitere Ergänzungseinheiten vorgesehen sein, die jeweils einen Uebersetzungshebel und einen diesem zugeordneten parallelgeführten Lastaufnehmer umfassen und mit denen sich in Verbindung mit der Waage nach Fig. 2 Waagen mit noch höherer Nennlast stufenweise aufbauen lassen. Dabei bleibt die durch die Grundeinheit vorgegebene hohe Auflösung bei den auf diese Weise aufgebauten Waagen höherer Nennlast auch im Falle einer mehrfachen Hebelübersetzung weitgehend erhalten.

Die Waage nach Fig. 3, welche die gleichen Funktionselemente wie diejenige nach Fig. 2 aufweist, unterscheidet sich von jener dadurch, dass die Grundeinheit und die Ergänzungseinheit in Flachbauweise nebeneinander angeordnet sind. Diese Anordnung bezieht sich in Anbetracht weiterer Ergänzungseinheiten vor allem auf die parallelgeführten Lastaufnehmer dieser Einheiten.

Gemäss Fig. 3 besteht die Ergänzungseinheit aus einer Grundplatte 24, mit welcher ein Ständer 25 starr verbunden ist. Der Ständer 25 trägt wiederum einen durch Biegelenker 26 und 27 parallelgeführten Lastaufnehmer 28. Dieser wirkt über ein Biegekoppel 29 auf einen Uebersetzungshebel 30, der mit einem Biegelager 31 am Ständer 25 gelagert ist.

Eine im Prinzip nach Fig. 1 aufgebaute Grundeinheit 32 ist auf der Grundplatte 24 befestigt, und der seitlich an der Grundeinheit 32 vorbeigeführte Uebersetzungshebel 30 ist mit dem Lastaufnehmer 33 der Grundeinheit 32 durch ein Biegekoppel 34 verbunden.

## Patentansprüche

1. Elektromechanische Waage mit mehrfacher Hebelübersetzung zwischen einem parallelgeführten Lastaufnehmer (16) für das Wägegut und einer Wägezelle (9), dadurch gekennzeichnet, dass wenigstens dem unmittelbar auf die Wägezelle (9) einwirkenden Uebersetzungshebel (7) ebenfalls ein parallelgeführter Lastaufnehmer (5) zugeordnet ist.

2. Elektromechanische Waage nach Anspruch 1, dadurch gekennzeichnet, dass der mit der Wägezelle (9) zusammenwirkende Uebersetzungshebel (7) und der diesem zugeordnete Lastaufnehmer (5) zusammen mit der Wägezelle zu einer baulichen Grundeinheit (1) vereinigt ist, die eine selbständige Waage niedriger Nennlast darstellt und in den übrigen mechanischen Teil (13 bis 20) der für eine höhere Nennlast bestimmten Waage eingesetzt ist.

3. Elektromechanische Waage nach Anspruch 2, dadurch gekennzeichnet, dass jedem der weiteren Uebersetzungshebel ein parallelgeführter Lastaufnehmer zugeordnet ist und dass jeweils ein Uebersetzungshebel und der zugehörige Lastaufnehmer eine bauliche Ergänzungseinheit bilden, in die eine Waage niedrigerer Nennlast zum Aufbau einer Waage höherer Nennlast einsetzbar ist.

4. Elektromechanische Waage nach Anspruch 3, dadurch gekennzeichnet, dass die Grundeinheit und die der Ergänzungseinheit zum Aufbau einer Waage mit der höchsten Nennlast untergeordneten Ergänzungseinheiten als Einschubgeräte ausgebildet sind.

5. Elektromechanische Waage nach einem der vorangehenden Ansprüche, dadurch gekennzeichnet, dass die jeweils einen parallelgeführten Lastaufnehmer (3, 4, 5; 26, 27, 28) umfassenden Baugruppen in Flachbauweise nebeneinander angeordnet sind.

6. Elektromechanische Waage nach einem der vorangehenden Ansprüche, mit einem zuschaltbaren Kalibriergewicht, dadurch gekennzeichnet, dass sich der Kraftangriffspunkt für das Kalibriergewicht (23) am Lastaufnehmer (5) für den mit der Wägezelle (9) zusammenwirkenden Uebersetzungshebel (7) befindet.

## Claims

1. An electromechanical balance with multiple lever transmission between a parallel-guided load receiving means (16) for the material to be weighed, and a weighing cell (9) , characterised in that a parallel-guided load receiving means (5) is also associated at least with the transmission lever (7) which acts directly on the weighing cell (9).

2. An electromechanical balance according to claim 1 characterised in that the transmission lever (7) which co-operates with the weighing cell (9) and the load receiving means (5) associated with said transmission lever is combined together with the weighing cell to provide a structural basic unit (1) which represents an independent balance of low nominal load and is inserted into the remaining mechanical part (13 to 20) of the balance which is intended for a higher nominal load.

3. An electromechanical balance according to claim 2 characterised in that a parallel-guided load receiving means is associated with each of the further transmission levers and that a respective transmission lever and the associated load receiving means form a structural supplemental unit into which a balance of lower nominal load can be inserted to construct a balance of higher nominal load.

4. An electromechanical balance according to claim 3 characterised in that the basic unit and the supplemental units below the supplemental unit for constructing a balance with the highest nominal load are in the form of insertion devices.

5. An electromechanical balance according to one of the preceding claims characterised in that the structural groups including a respective parallel-guided load receiving means ( 3, 4, 5; 26, 27, 28 ) are arranged in juxtaposed relationship in a flat design configuration.

6. An electromechanical balance according to one of the preceding claim comprising a calibration weight which can be brought into operation characterised in that the force engagement point for the calibration weight (23) is on the load receiving means (5) for the transmission lever (7) which co-operates with the weighing cell (9).

## Revendications

1. Balance électromécanique à transmission multiple par leviers entre un récepteur de charge (16) à guidage auto-parallèle, destiné au produit à peser, et une cellule de pesée (9), caractérisée en ce qu'un récepteur de charge (5) à guidage auto-parallèle est également combiné avec au moins le levier de transmission (7) agissant directement sur la cellule de pesée (9).

2. Balance électromécanique selon la revendication 1, caractérisée en ce que le levier de transmission (7) qui coopère avec la cellule de pesée (9) et le récepteur de charge (5) combiné avec ce levier sont réunis avec la cellule de pesée en un module constitutif de base (1) qui représente une balance autonome à faible charge nominale et qui se loge dans la partie mécanique restante (13 à 20) de la balance destinée à une charge nominale supérieure.

3. Balance électromécanique selon la revendication 2, caractérisée en ce qu'un récepteur de charge à guidage auto-parallèle est combiné avec chaque autre levier de transmission et en ce que, dans chaque cas, un levier de transmission et le récepteur de charge correspondant forment un module constitutif de complément dans lequel une balance à charge nominale inférieure peut se monter pour la réalisation d'une balance à charge nominale supérieure.

4. Balance électromécanique selon la revendication 3, caractérisée en ce que le module de base et les modules de complément, d'un rang inférieur au module de complément destiné à la réalisation d'une balance à charge nominale la plus élevée, sont réalisés en appareils formant des tiroirs.

5. Balance électromécanique selon l'une des revendications précédentes, caractérisée en ce que les groupes constitutifs, dont chacun comprend un récepteur de charge à guidage auto-parallèle (3, 4, 5 ; 26, 27, 28), sont disposés côte à côte en mode de construction aplati.

6. Balance électromécanique selon l'une des revendications précédentes, à couplage d'un poids d'étalonnage, caractérisée en ce que le point d'attaque de la force du poids d'étalonnage (23) se trouve sur le récepteur de charge (5) du levier de transmission (7) coopérant avec la cellule de pesée (9).
